**Europäisches Patentamt**

**European Patent Office**

**Office européen des brevets**

(19)

(11) Numéro de publication: **0 083 573**
**B1**

(12) # FASCICULE DE BREVET EUROPEEN

(45) Date de publication du fascicule du brevet:
**14.08.85**

(51) Int. Cl.⁴: **G 01 J 3/18**

(21) Numéro de dépôt: **83400003.6**

(22) Date de dépôt: **03.01.83**

(54) **Dispositif de spectrométrie.**

(30) Priorité: **04.01.82 FR 8200018**

(43) Date de publication de la demande:
**13.07.83 Bulletin 83/28**

(45) Mention de la délivrance du brevet:
**14.08.85 Bulletin 85/33**

(84) Etats contractants désignés:
**AT BE CH DE FR GB IT LI LU NL SE**

(56) Documents cités:
**DE - A - 1 813 986**
**FR - A - 2 334 947**
**US - A - 3 472 595**
**US - A - 4 250 465**

(73) Titulaire: **INSTRUMENTS S.A., 25, aveneu de l'Opéra,
F-75001 Paris (FR)**

(72) Inventeur: **Thevenon Alain, Résidence Champ
Fleuri 14 rue Maurice Boyau, F-91220 Bretigny (FR)**

(74) Mandataire: **Phélip, Bruno et al, c/o Cabinet Harlé &
Phélip 21, rue de la Rochefoucauld, F-75009 Paris (FR)**

ACTORUM AG

## Description

La présente invention se rapporte à un dispositif de spectrométrie capable de décomposer, pour analyse, une lumière polychromatique en donnant un spectre s'étendant dans l'ultraviolet, le visible et le proche infrarouge. Ce dispositif est notamment destiné à un instrument de spectrométrie d'émission à lecture directe.

Les polychromateurs sont montés dans les instruments de spectrométrie d'émission pour analyser la lumière polychromatique émise par excitation de l'échantillon à analyser. Ces polychromateurs utilisent le plus souvent le montage de Paschen-Runge et comportent un réseau de diffraction concave, gravé ou holographique, qui reçoit la lumière polychromatique au travers d'une fente d'entrée pour la décomposer, par diffraction, en une série de faisceaux convergents de lumières monochromatiques. Certains de ces faisceaux sont isolés ou sélectionnés par des fentes de sortie placées au niveau des images de la fente d'entrée. Dans le montage de Paschen-Runge, la fente d'entrée, le réseau et les fentes de sortie sont situés sur un cercle fictif dit de Rowland qui est tangent au réseau et a un diamètre égal au rayon de courbure du réseau. Les flux lumineux sont mesurés par des détecteurs constitués par des photomultiplicateurs. Un tel dispositif de spectrométrie est décrit, par exemple, dans le document DE-A-1 813 986.

En spectrométrie d'émission, les raies d'analyse se situent principalement dans le domaine de l'ultraviolet. On cherche aussi à analyser les éléments alcalins tels que le sodium, le lithium, le potassium, le rubidium et le césium dont les raies se situent dans le domaine du visible et du proche infrarouge (de 5889 Å à 8521 Å).

Pour obtenir un spectre s'étendant de l'ultraviolet au proche infrarouge, on utilise généralement un montage de Paschen-Runge avec une grande focale (de l'ordre de 1 m) et un réseau dont le nombre de traits par mm se situe entre 1000 et 1500. En conséquence le coefficient de dispersion linéaire (nombre de nanomètres par unité de longueur du spectre) qui est inversement proportionnel au nombre de traits par mm et à la focale est relativement élevé. L'utilisation d'un seul réseau pour un domaine de longueurs d'onde aussi large n'est donc pas favorable.

La présente invention se rapporte à un dispositif de spectrométrie du type polychromateur double présentant une bonne dispersion linéaire, une résolution élevée, une très haute efficacité dans le domaine de l'ultraviolet, du visible et du proche infrarouge. La focale (ou le diamètre du cercle de Rowland) peut avoir une valeur faible ce qui diminue l'encombrement et conduit à une très grande stabilité aux fluctuations thermiques ou mécaniques. Par ailleurs ce faible encombrement permet de réduire le poids et le prix et d'éviter la régulation en température. Le dispositif utilise un réseau à champ plan dans le domaine du visible et du proche infrarouge.

Le dispositif selon l'invention permet d'analyser la lumière polychromatique venant d'une source d'excitation et comporte un premier montage optique constitué d'un premier polychromateur pourvu d'un réseau concave recevant ladite lumière polychromatique au travers d'une fente d'entrée pour la diffracter en faisceaux monochromatiques du domaine ultraviolet dirigés sur des fentes de sortie associées à des détecteurs de mesure, lesdites fentes et ledit réseau étant positionnés sur le cercle de Rowland et il est caractérisé par le fait que le faisceau d'ordre 0, symétrique du faisceau incident par rapport à la normale au réseau, est repris par un second montage optique qui disperse ledit faisceau en plusieurs faisceaux monochromatiques du domaine du visible ou du proche infrarouge, au moins une fente de sortie sélectionnant un desdits faisceaux monochromatiques mesuré par un détecteur de mesure.

Selon une autre caractéristique, le second montage optique est un second polychromateur dont la fente d'entrée est située au point focal image d'ordre 0 du premier réseau.

Selon une caractéristique le nombre de traits par unité de longueur du réseau du premier polychromateur est supérieur au nombre de traits par unité de longueur du réseau du second polychromateur.

Selon une autre caractéristique, le réseau du second polychromateur est un réseau holographique concave à champ plan.

Selon une caractéristique, les paramètres du réseau holographique à champ plan sont adaptés de manière à corriger l'astigmatisme du réseau du premier polychromateur.

Selon une caractéristique, le faisceau d'ordre 0 est réfléchi sur au moins un miroir entre le premier et le second réseau.

Selon une autre caractéristique, le dispositif comporte un monochromateur analysant la lumière de la source d'excitation reçue par le premier polychromateur et le second montage optique.

L'invention va maintenant être décrite avec plus de détails en se référant à des modes de réalisation donnés à titre d'exemples et représentés par les dessins annexés.

La fig. 1 est une vue schématique en perspective d'un dispositif de type polychromateur double conforme à l'invention permettant d'analyser la lumière venant d'une source d'excitation.

La fig. 2 représente le schéma d'un dispositif associant un double polychromateur à un monochromateur.

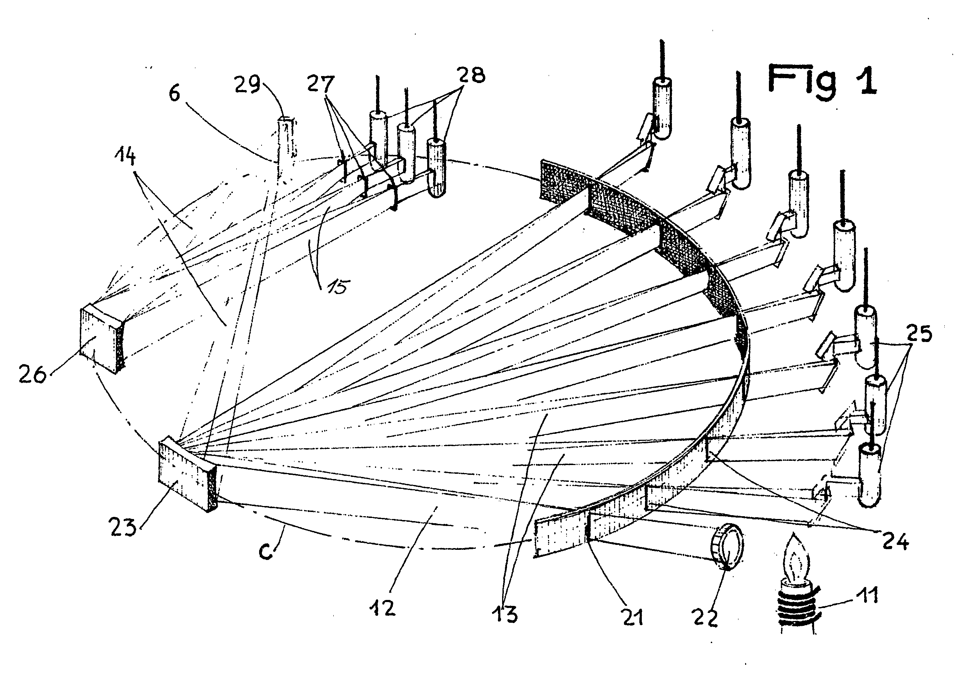

Le dispositif de type double polychromateur qui est représenté sur la fig. 1 sert à analyser la lumière polychromatique émise par l'échantillon sous l'effet de la source d'excitation 11. Dans le mode de réalisation qui est représenté la source d'excitation est à plasma et la lumière venant de cette source est focalisée par un objectif 22 sur une fente d'entrée 21.

Ce double polychromateur comporte un premier polychromateur comprenant la fente d'entrée 21, un réseau 23 constitué par une série de traits sur une surface sphérique concave et des fentes de sortie 24. Des détecteurs de mesure de flux lumineux 25 de type photomultiplicateurs sont associés aux fentes de sortie. La fente d'entrée 21, le réseau concave 23 et les fentes de sortie 24 sont positionnées sur un cercle fictif dit de Rowland — repéré C — qui est tangent au réseau 23 et a un diamètre égal au rayon de courbure du réseau.

Le faisceau polychromatique 12 venant de la fente d'entrée 21 est dirigé sur le réseau 23. La lumière est diffractée par le réseau 23 en une pluralité de faisceaux monochromatiques 13 qui convergent et donnent des images de la fente 21 sur le cercle de Rowland. Les fentes de sortie 24, qui sont montées au niveau des images, sélectionnent certaines longueurs d'onde.

Chaque faisceau monochromatique 13 a une position angulaire bien précise et déterminée. Si l'on pose que la lumière polychromatique arrive sur le réseau 23 sous une incidence α par rapport à la normale N, la position de la lumière diffractée est donnée par la relation sin α+sin β= kn λ, β étant l'angle du faisceau diffracté par rapport à la normale, n le nombre de traits par unité de longueur du réseau, λ la longueur d'onde et k un nombre entier. Pour chaque valeur de k, il y a un spectre correspondant aux différentes longueurs d'onde composant la lumière polychromatique inidente.

Les détecteurs de mesure 25 sont montés en arrière des fentes de sortie 24, par rapport au sens de propagation de la lumière, pour mesurer l'intensité lumineuse passant au travers desdites fentes de sortie.

Le réseau 23 réalisé par gravure ou holographie donne un spectre dans l'ultraviolet. Il comporte un nombre de traits par unité de longueur relativement élevé (de l'ordre de 3600 traits/mm). De cette manière le coefficient de dispersion linéaire — inversement proportionnel au nombre de traits par unité de longueur et à la focale — est relativement faible et la dispersion linéaire est donc bonne. La focale est courte (de l'ordre de 0,5 m). Du fait que le réseau 23 a un nombre de traits élevé, l'ordre 0 comporte peu d'ultraviolet, du visible et l'intégralité du proche infrarouge. Dans l'ordre 0 il n'y a aucune dispersion et le réseau 23 réfléchit la lumière essentiellement du visible et du proche infrarouge à la manière d'un miroir, le faisceau d'ordre 0 étant symétrique du faisceau incident 12 par rapport à la normale N au réseau. Par ailleurs le réseau 23 est optimisé pour améliorer l'efficacité dans l'ordre 1 pour le domaine ultraviolet.

Le double polychromateur comporte un second montage optique qui décompose le faisceau d'ordre 0 — repéré 14 — en une pluralité de faisceaux monochromatiques 15 du domaine du visible et du proche infrarouge qui sont dirigés sur des fentes de sortie 27 en arrière desquelles sont montés des détecteurs de mesure du flux lumineux 28 qui sont des photomultiplicateurs. Le faisceau d'ordre 0 est le faisceau 14 qui vient du réseau 23 du premier polychromateur et qui est symétrique du faisceau incident 12 par rapport à la normale N au premier réseau 23. Ce second montage est un polychromateur pourvu d'un réseau 26 formé de traits enveloppant une surface sphérique concave. La fente d'entrée 6 fictive ou réelle de ce réseau 26 se situe au point focal image — repéré 6 — de l'ordre 0 du premier réseau 23 c'est-à-dire au point situé sur le cercle de Rowland symétriquement à la fente d'entrée 21 par rapport à la normale N au réseau 23.

Chaque fente de sortie 27 associée à un faisceau monochromatique reçoit l'image de l'image 6 de lumière essentiellement visible et infrarouge.

Le second réseau donne un spectre dans le domaine du visible et du proche infrarouge et comporte un nombre de traits par unité de longueur plus faible (de l'ordre de 1200 traits/mm).

Par exemple, le second réseau 26 est un réseau holographique sphérique concave à champ plan conforme au brevet français N° 2334947 et à son addition N° 2396961.

Les paramètres du réseau 26 sont adaptés de manière à corriger l'astigmatisme donné par le premier réseau 23 et à éviter ainsi les pertes d'énergie. Les corrections du réseau (aberrations et astigmatisme) sont effectuées conformément au brevet français N° 2334947 et à son addition.

Le faisceau dans l'ordre 0 peut être réfléchi entre le premier réseau 23 et le second réseau 26 par un miroir 29. Cet agencement entraîne une diminution de l'encombrement.

Les composants associés au second polychromateur c'est-à-dire le réseau 26, le miroir 29, les fentes de sortie 27 montées sur des supports et les détecteurs de mesure 28 sont montés sur un support qui est fixé sur la structure ou le bâti portant les composants associés au premier réseau 23.

Le spectre s'étendant dans le visible et dans l'infrarouge au lieu d'être donné par le réseau 26 pourrait être donné par un organe dispersif ou filtrant recevant le faisceau d'ordre 0 venant du premier réseau 23.

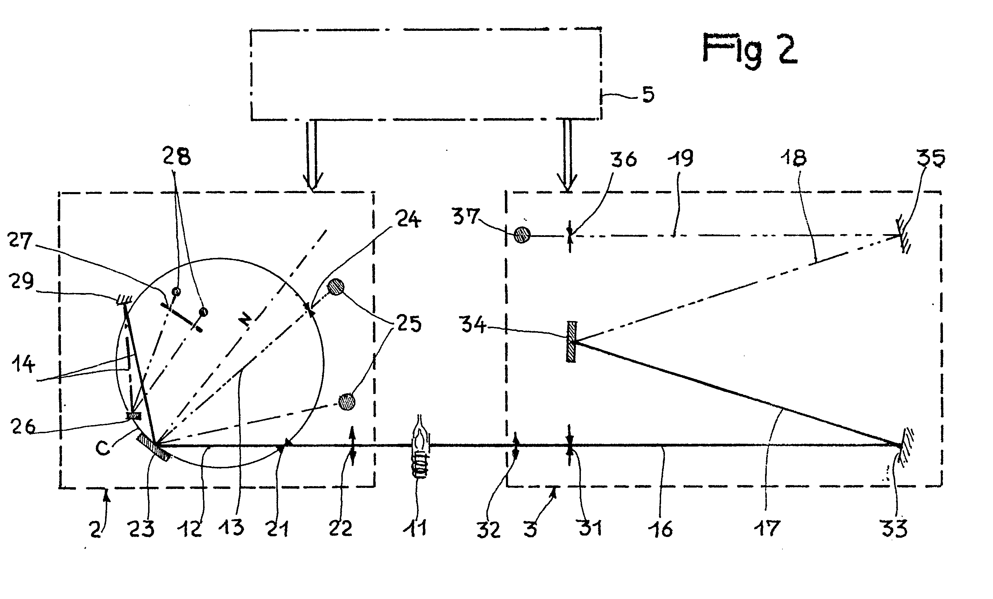

Le dispositif de type polychromateur double décrit ci-dessus peut être utilisé seul pour l'analyse simultanée de plusieurs éléments. Il peut aussi être associé à un monochromateur dans un ensemble illustré sur la fig. 2 de manière à permettre l'analyse simultanée de plusieurs éléments parmi lesquels des éléments non programmés ou un élément devant être analysé avec une haute résolution (uranium, plutonium). Ce dispositif permet alors d'effectuer des analyses dans l'ultraviolet, le visible et le proche infrarouge, les mesures dans l'ultraviolet étant effectuées avec une très haute résolution.

Le dispositif illustré par la fig. 2 associe d'une part le dispositif de type double polychromateur qui est décrit ci-dessus et qui est repéré 2 et d'autre part un monochromateur 3. Ces deux parties du dispositif analysent la lumière venant d'une source d'excitation commune 11.

Le monochromateur 3 utilise un montage de type Czerny-Turner. Il comporte une fente d'entrée rectiligne 31 sur laquelle la lumière venant de la source 11 est focalisée par un objectif 32. Le faisceau 16 venant de la source 11 est réfléchi selon 17 par un miroir collimateur 33 de type concave sphérique. Le faisceau réfléchi est reçu sur un réseau holographique plan 34 qui diffracte la lumière en donnant un faisceau diffracté 18. Ce faisceau 18 est réfléchi selon 19 par un miroir de focalisation 35 de type concave sphérique. Ce faisceau réfléchi 19 converge vers la fente de sortie 36. Le flux lumineux est mesuré en arrière de cette fente de sortie par un détecteur 37 de type photomultiplicateur. Le réseau 34 pivote, sous l'action d'un moteur, autour d'un axe parallèle aux traits du réseau, les miroirs 33 et 35 étant fixes.

Les signaux des détecteurs 37, 25, 28 sont envoyés à une unité électronique 5 de contrôle et de traitement, cette unité pilotant l'ensemble de l'instrument équipé du dispositif.

## Revendications

1. Dispositif de spectrométrie permettant d'analyser la lumière polychromatique venant d'une source d'excitation (11), comportant un premier montage optique constitué d'un premier polychromateur pourvu d'un réseau concave (23) recevant ladite lumière au travers d'une fente d'entrée (21) pour la diffracter en faisceaux monochromatiques (13) du domaine ultraviolet dirigés sur des fentes de sortie (4) associées à des détecteurs de mesure (25), lesdites fentes (21, 24) et ledit réseau (23) étant positionnés sur le cercle de Rowland, caractérisé par le fait que le faisceau d'ordre 0, symétrique du faisceau incident par rapport à la normale au réseau (23), est repris par un second montage optique qui disperse ledit faisceau en plusieurs faisceaux monochromatiques (15) du domaine du visible ou du proche infrarouge, au moins une fente de sortie (27) sélectionnant un desdits faisceaux monochromatiques mesuré par un détecteur de mesure (28).

2. Dispositif selon la revendication 1, caractérisé par le fait que le second montage optique est un second polychromateur pourvu d'un réseau (26) dont la fente d'entrée (6) est au point focal image de l'ordre 0 du premier réseau (23).

3. Dispositif selon l'une quelconque des revendications précédentes, caractérisé par le fait que le nombre de traits par unité de longueur du réseau (23) du premier polychromateur est supérieur au nombre de traits par unité de longueur du réseau (26) du second polychromateur.

4. Dispositif selon la revendication 2, caractérisé par le fait que le réseau (26) du second polychromateur est un réseau holographique concave à champ plan.

5. Dispositif selon l'une quelconque des revendications précédentes, caractérisé par le fait que les paramètres du réseau holographique à champ plan (26) sont adaptés de manière à corriger l'astigmatisme du premier réseau (23).

6. Dispositif selon l'une quelconque des revendications précédentes, caractérisé par le fait que le faisceau d'ordre 0 est réfléchi sur au moins un miroir (29) entre le premier réseau (23) et le second réseau (26).

7. Dispositif selon l'une quelconque des revendications précédentes, caractérisé par le fait qu'il comporte un monochromateur (3) analysant la lumière de la source d'excitation (11) reçue par le premier polychromateur et le second montage optique.

## Patentansprüche

1. Spektrometrievorrichtung, welche die Analyse polychromatischen Lichtes zulässt, das von einer Erregerquelle (11) ausgeht, mit einer ersten optischen Anordnung, die aus einem ersten Polychromator besteht, der mit einem konkaven Gitter (23) versehen ist, das das Licht durch einen Einlassschlitz (21) empfängt, um es in monochromatische Strahlenbündel (13) im ultravioletten Bereich zu brechen, die auf Auslassschlitze (4) gerichtet sind, die Messfühlern (25) zugeordnet sind, wobei die Schlitze (21, 24) und das Gitter (23) auf dem Rowlandkreis angeordnet sind, dadurch gekennzeichnet, dass das Strahlenbündel der nullter Ordnung das symmetrisch zu dem einfallenden Strahlenbündel in bezug auf die Normale zum Gitter (23) ist, von einer zweiten optischen Anordnung aufgenommen wird, die das Strahlenbündel in mehrere monochromatische Strahlenbündel (15) im sich baren und nahen infraroten Bereich zerstreut und dass wenigstens ein Auslassschlitz (27) eines der monochromatischen Strahlenbündel auswählt, das von einem Messfühler (28) gemessen ist.

2. Vorrichtung nach Anspruch 1, dadurch gekennzeichnet, dass die zweite optische Anordnung ein zweiter Polychromator ist, der mit einem Gitter (26) versehen ist, dessen Einlassschlitz (6) sich im Brennpunkt des Bildes nullter Ordnung des ersten Gitters (23) befindet.

3. Vorrichtung nach einem der vorhergehenden Ansprüche, dadurch gekennzeichnet, dass die Anzahl der Striche pro Längeneinheit des Gitters (23) des ersten Polychromators grösser ist als die Anzahl der Striche pro Längeneinheit des Gitters (26) des zweiten Polychromators.

4. Vorrichtung nach Anspruch 2, dadurch gekennzeichnet, dass das Gitter (26) des zweiten Polychromators ein konkaves holographisches Gitter mit planem Feld ist.

5. Vorrichtung nach einem der vorhergehenden Ansprüche, dadurch gekennzeichnet, dass die Parameter des holographischen Gitters (26) mit planem Feld so gewählt sind, dass sie den Astigmatismus des ersten Gitters (23) korrigieren.

6. Vorrichtung nach einem der vorhergehenden Ansprüche, dadurch gekennzeichnet, dass das Strahlenbündel nullter Ordnung auf wenigstens einem Spiegel (29) zwischen dem ersten Gitter (23) und dem zweiten Gitter (26) reflektiert wird.

7. Vorrichtung nach einem der vorhergehenden Ansprüche, dadurch gekennzeichnet, dass sie einen Monochromator (3) besitzt, der das von der Erregerquelle (11) ausgehende und von dem ersten Polychromator und der zweiten optischen Anordnung empfangene Licht analysiert.

## Claims

1. Spectrometry device enabling to analyse the polychromatic light coming from an excitation

7  0 083 573  8

source (11), comprising a first optical assembly consisting of a first polychromator provided with a concave grating (23) receiving the said light through an entry slit (21) to diffract it into monochromatic beams (13) in the ultraviolet range, directed onto exit slits (4) associated with measuring detectors (25), the said slits (21, 24) and the said grating (23) being positioned on the Rowland circle, characterised in that the 0 order beam, symmetrical to the incident beam relative to the normal to the grating (23), is received by a second optical assembly which disperses the said beam into several monochromatic beams (15) in the visible or the near infrared range, with at least one exit slit (27) selecting one of the said monochromatic beams which is measured by a measuring detector (28).

2. Device according to Claim 1, characterised in that the second optical assembly is a second polychromator provided with a grating (26) the entry slit (6) of which is at the 0 order image focus of the first grating (23).

3. Device according to any one of the preceding claims, characterised in that the number of lines per unit length of the first polychromator grating (23) is greater than the number of lines per unit length of the second polychromator grating (26).

4. Device according to Claim 2, characterised in that the second polychromator grating (26) is a planefield concave holographic grating.

5. Device according to any one of the preceding claims, characterised in that the parameters of the plane field holographic grating (26) are adjusted so as to correct the astigmatism of the first grating (23).

6. Device according to any one of the preceding claims, characterised in that the 0 order beam is reflected in at least one mirror (29) between the first grating (23) and the second grating (26).

7. Device according to any one of the preceding claims, characterised in that it incorporates a monochromator (3) analysing the light from the excitation source (11) received by the first polychromator and the second optical assembly.

Fig 1

11
12
13
14
15
21
22
23
24
25
26
27
28
29
6
C

Fig 2